# EUROPÄISCHE PATENTANMELDUNG

(11) **EP 1 020 334 A2**
(43) Veröffentlichungstag der Anmeldung: **19.07.2000**
(21) Anmeldenummer: 00100356.5
(22) Anmeldetag: 07.01.2000
(51) Int. Cl.: B60R 22/195

(54) **Seilführungselement für einen pyrotechnischen Gurtstraffer**

(30) Priorität: 12.01.1999 DE 29900341 U
(71) Anmelder: Dittrich, Klaus-Jürgen, 28832 Achim (DE)
(72) Erfinder: Dittrich, Klaus-Jürgen, 28832 Achim (DE)

(57) **Zusammenfassung**

Es wird ein Seilführungselement zum Einsetzen in den Rohrzylinder(10) eines pyrotechnischen Gurtstraffers mit mindestens einem axialen Seildurchgangsloch (5) angegeben. Das Seilführungselement weist neben wenigstens einem Seildurchgangsloch (5) einen Raum (110) auf in dem der Gasgenerator eingesetzt wird. Der Raum steht über eine Öffnung mit dem Druckraum (26) in Verbindung. Ein Ende des Zugseiles (150) ist durch das Seildurchgangsloch (5) in den Rohrzylinder geführt und an dem Kolben (1) befestigt. Der Kolben (1) wird nach Auslösen des Gasgenerators unter dem sich schlagartig ausbreitenden Gasdruckes aus der Ruheposition heraus in eine Straffposition verschoben. Am Kolben (1) befindet sich eine Rücklaufsperre, die den Kolben in der Straffhalteposition zu halten vermag.

## Beschreibung

Die Erfindung betrifft ein Seilführungselement zum Einsetzen in den Rohrzylinder eines pyrotechnischen Gurtstraffers mit mindestens einem axialen Seildurchgangsloch.

Bekannte pyrotechnische Gurtstraffer weisen ein Zugseil auf, das über eine Seilumlenkung mit einem Gurtanlenkglied verbunden ist, an dem etwa ein Gurtschloß befestigt ist. An der Seilumlenkung ist ein Rohrzylinder befestigt, in dem ein Kolben verschiebbar angeordnet ist. Zwischen der Seilumlenkung und dem Kolben ist im Inneren des Rohrzylinders ein Seilführungselement befestigt. Zwischen dem Kolben und dem Seilführungselement befindet sich ein Druckraum. Das Seilführungselement ist in der Längsrichtung des Rohrzylinders mit wenigstens einem Seildurchgangsloch versehen. Es weist ferner einen Raum auf, in den ein Gasgenerator eingesetzt ist. Der Raum steht über eine Öffnung mit dem Druckraum in Verbindung. Ein Ende des Zugseils ist durch das Seildurchgangsloch in den Rohrzylinder geführt und an dem Kolben befestigt. Der Kolben ist aus einer Normalposition in eine Straffhalteposition verschiebbar, in der er das Zugseil spannt, so daß es einen Gurt strafft. Am Kolben befindet sich eine Rücklaufsperre, die den Kolben in der Straffhalteposition zu halten vermag.

Beim Auslösen eines Straff-Vorganges wird das Treibmittel des Gasgenerators gezündet und strömt explosionsartig in den Druckraum ein. Der Kolben wird unter dem Druck des einströmenden Treibmittels in die Straffhalteposition verschoben.

Aus der DE-296 04 482 U1 ist das Seilführungselement eines pyrotechnischen Gurtstraffers bekannt. Dieses bekannte Seilführungselement ist in dem Rohrzylinder des Gurtstraffers in axialer Richtung des Rohres versetzt zu einem in dem Rohr verschiebbaren Kolben angeordnet. Es weist eine Aussparung auf, in die eine Treibladungspatrone eingesetzt ist, und im verbleibenden Bereich mindestens ein axial verlaufendes Seildurchgangsloch zur Führung eines Zugseils an der Treibladungspatrone vorbei. Nachteilig ist bei dem bekannten Seilführungselement, daß darin der an sich verfügbare Raum zur Aufnahme der Patrone wegen ihrer vorgegebenen Form nicht gut ausgenutzt wird, so daß das Seilführungselement und damit auch der Rohrzylinder unnötig lang sind.

Aufgabe der Erfindung ist es, ein Seilführungselement der eingangs genannten Art kompakter aufzubauen.

Diese Aufgabe wird bei dem Seilführungselement der eingangs genannten Art erfindungsgemäß durch einen verschließbaren Hohlraum in dem Seilführungselement gelöst mit einer Treibladung in dem Hohlraum und mit einer in die Treibladung hineinragenden Zündvorrichtung.

Die Vorteile der Erfindung liegen insbesondere in einer Verbesserung der Raumnutzung und einer sich daraus möglicherweise ergebenden Verkürzung des Seilführungselementes und einer Vereinfachung seines Aufbaus.

Vorteilhafterweise ist die Längsachse des Hohlraums parallel zu dem Seildurchgangsloch angeordnet; das Seilführungselement ist in einer länglichen Form ausgebildet ist und läßt sich in dem Rohrzylinder des Gurtstraffers besonders fest verankern.

Gemäß einer bevorzugten Ausführungsform enthält die Zündvorrichtung eine Zündladung in einer Zündkammer, ein die Zündladung von der Treibladung trennendes fragiles Trennelement und eine in der Zündladung liegende Zündstrecke, deren Zündkontakte mittels Anschlußorganen, die aus dem Seilführungselement herausgeführt sind. Die Zündvorrichtung läßt sich als funktionstüchtige Einheit in das Seilführungselement vor der Befüllung mit der Treibladung einsetzen. Besonders bevorzugt ist eine Ausführungsform, bei der ein elektrischer Schaltkreis, beispielsweise ein Tiefpaß, an die Anschlußorgane angeschlossen, um zufällig durch eventuelle Streufelder induzierte Spannungsspitzen zu unterdrücken und ein unbeabsichtigtes Zünden zu verhindern.

Bei einer bevorzugten Ausführungsform ragt die Zündvorrichtung durch eine Bohrung in einer ersten Stirnseite des Hohlraumes in diesen hinein, und eine zweite Stirnseite, die der ersten Stirnseite gegenüberliegt, ist mit einem fragilen Verschlußelement verschlossen. Durch diese Anordnung vereinfacht sich die Herstellung des Seilführungselementes ganz besonders, wenn die Zündvorrichtung funktionstüchtig vorgefertigt ist, weil diese durch die zweite Stirnseite und den Hohlraum hindurchgeschoben wird, um die Bohrung in der ersten Stirnseite zu verschließen. Der Hohlraum ist mit der Treibladung befüllt und mit einem fragilen Verschlußelement an der zweiten Stirnseite verschlossen.

Vorteilhafterweise hat das Seilführungselement eine zylinderförmige Außenkontur, deren Außendurchmesser etwa dem Innendurchmesser des Rohrzylinders entspricht, damit ein besonders sicherer und stabiler Halt des Seilführungselementes durch dessen form- und ggf. reibschlüssiges Anliegen an den Innenwänden des Rohrzylinders gegeben ist.

Es ist dabei von besonderem Vorteil, wenn die Achse des Seildurchgangslochs und/oder die Längsachse des Hohlraumes im wesentlichen parallel zur Achse des zylinderförmigen Seilführungselementes verlaufen. Bei dieser Ausführungsform wird eine in Längsrichtung des Seilführungselementes ungleichmäßige Verteilung von Kräften vermieden, so daß eine besondere Stabilität der Befestigung des Seilführungselementes im Rohrzylinder gewährleistet ist.

Bei einer anderen Ausführungsform ist das zylinderförmige Seilführungselement aus mehreren separaten Elementabschnitten zusammengesetzt. Eine derartige Ausführungsform ist gegebenenfalls in fertigungstechnischer Hinsicht und/oder hinsichtlich der Festigkeit des Seilführungselementes vorteilhaft.

Bevorzugt ist das Seilführungselement oder sind die Elementabschnitte aus Kunststoffmaterial hergestellt. Das Kunststoffmaterial ist beispielsweise gegossen oder gespritzt und weist vorzugsweise eine zur Befestigung im Inneren des Rohrzylinders geeignete Form auf; ferner sind beispielsweise die Anschlußorgane und andere Teile der Zündvorrichtung unmittelbar von Kunststoff umgeben.

Ein Gurtstraffer mit einem Kolben, der mittels einer Treibladung im Falle eines Unfalles in einem Rohrzylinder linear verschiebbar ist und der mit mindestens einem Zugseil verbunden ist, das durch Verschiebung des Kolbens zurückziehbar ist, weist ein Seilführungselement in dem Rohrzylinder auf, daß bevorzugt erfindungsgemäß ausgebildet ist. Der Vorteil eines solchen Gurtstraffers besteht in einem besonders kompakten Aufbau, so daß er flexibler in einem Fahrzeug eingebaut werden kann.

Vorteilhafte Weiterbildungen der Erfindung sind durch die Unteransprüche gekennzeichnet.

Im folgenden wird ein Ausführungsbeispiel der Erfindung anhand der Zeichnungen näher erläutert. Es zeigen:
- Fig. 1: eine Seitenansicht eines Gurtstraffers, teilweise im Schnitt;
- Fig. 2: eine Seitenansicht, eines Seilführungselementes, teilweise im Schnitt.

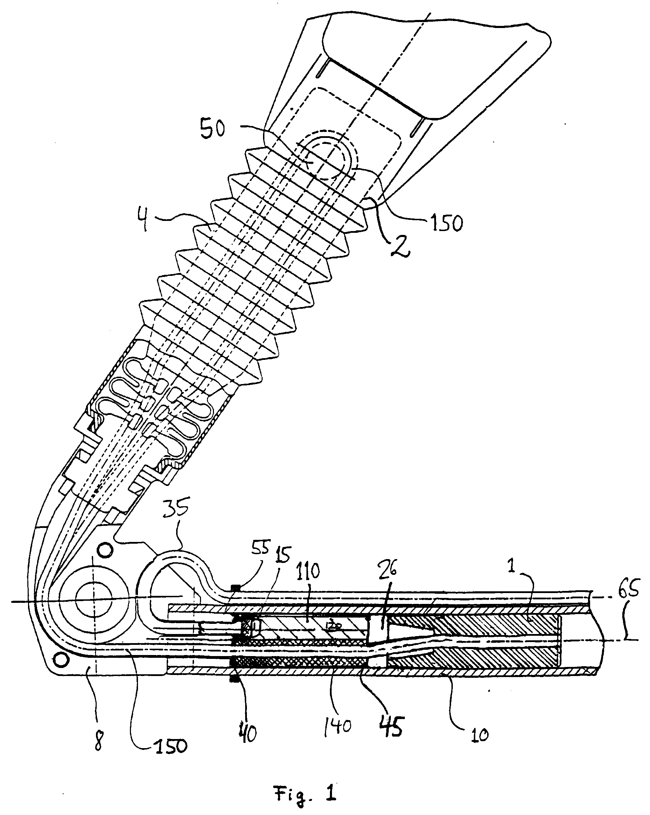

In Fig. 1 ist ein Gurtstraffer mit einem Gurtanlenkglied 2, an dem ein Gurtschloß befestigt ist, eine Seilumlenkung 8, und ein Rohrzylinder 10 sowie ein in dem Rohrzylinder 10 verschiebbarer Kolben 1 dargestellt. Das Gurtanlenkglied 2 ist mit dem Kolben 1 über ein dehnfestes, in zwei Strängen gelegtes Zugseil 150 verbunden, welches mit einer Schlaufe um einen Zapfen 50 des Gurtanlenkgliedes 2 gelegt ist. Weiterhin ist das Zugseil 150 durch einen Kanal einer Seilumlenkung 8 und anschließend durch Seildurchgangslöcher 5 eines Seilführungselementes 140 geführt, das in dem Rohrzylinder 10 angeordnet ist. Der Rohrzylinder 10 ist an der Seilumlenkung 8 befestigt. Auf der Strecke zwischen dem Gurtanlenkglied 2 und der Seilumlenkung 8 ist das Zugseil 150 von einem Faltenbalg 4 ummantelt. In dem Rohrzylinder 10 ist zwischen der Stirnwand 45 und dem Kolben 1 ein Druckraum 26 vorgesehen. Zum Druckraum 26 hin schließt ein fragiles Trennelement das Seildurchführungselement an seiner Stirnseite 45 ab.

In dem Seilführungselement 140 ist ein Hohlraum 110 vorgesehen, der mit Treibladung 120 gefüllt ist. Der Zünder 15 ist über ein Anschlußorgan 35, etwa ein Zündkabel, welches durch die Stirnwand 40 und anschließend durch eine Durchgangsöffnung in der Seilumlenkung 8 nach außen geführt ist, mit einem Sensor (nicht dargestellt) verbunden.

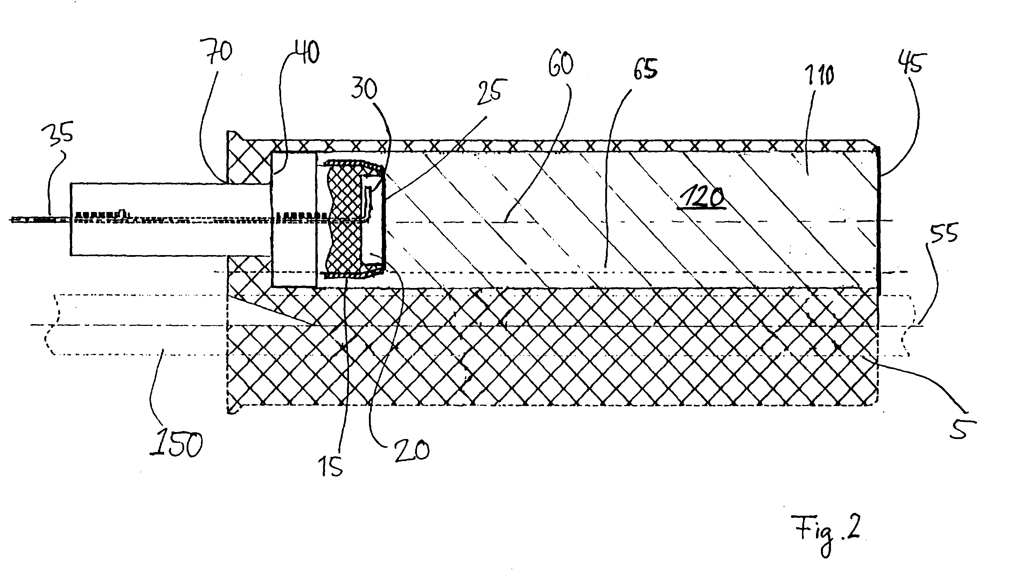

Das in der Figur 2 in vergrößertem Maßstab dargestellte Seilführungselement hat eine zylindrische Form. Quer zu seiner Längsachse 65 lassen sich wenigstens zwei Abschnitte unterscheiden. Ein erster Abschnitt erstreckt sich über die Längsausdehnung des Seilführungselementes und ist mit einem axialen Seildurchgangsloch 5 versehen, durch welches das Zugseil hindurchgeführt wird. Die Achse 55 des Seildurchgangslochs 5 erstreckt sich parallel zur Längsachse 65 des zylindrischen Seilführungselementes.

Ein zweiter Abschnitt - in der Zeichnung im oberen Bereich dargestellt - erstreckt sich ebenfalls über die Längsausdehnung des Seilführungselementes und beinhaltet den Hohlraum 110. Die Längsachse 60 des Hohlraumes 110 verläuft parallel zur Längsachse 55 des Seildurchgangsloches 5 und parallel zur Längsachse 65 des Seilführungselementes. Der Hohlraum 110 weist eine erste Stirnfläche 40, und dieser gegenüber eine Öffnung auf, die mit einem fragilen Verschlußelement 45 verschlossen ist und die Zündvorrichtung 15 sowie die Treibladung aufnimmt. Die Zündvorrichtung 15 befindet sich in dem Hohlraum 110, liegt an der Stirnfläche 40 des Hohlraums an und ragt durch eine Bohrung 70 mit verringertem Querschnitt in den Rohrzylinder 10 hinein. Die Zündkontakte 30 der Zündvorrichtung 15 befinden sich in dem Hohlraum 110 und sind von einer Zündladung in einer Zündkammer umgeben, die von einem fragilen Trennelement 25 begrenzt wird. Die Zündkontakte 30 sind mit Anschlußorganen 35 verbunden, die außerhalb des Seilführungselementes zum Anschluß an einen Bewegungssensor o.dgl. freigelegt sind, vgl. Fig. 1.

## Patentansprüche

1. Seilführungselement zum Einsetzen in den Rohrzylinder eines pyrotechnischen Gurtstraffers mit mindestens einem axialen Seildurchgangsloch (5),
gekennzeichnet durch einen verschließbaren Hohlraum (110) in dem Seilführungselement mit einer Treibladung in dem Hohlraum (110) und mit einer in die Treibladung hineinragenden Zündvorrichtung (15).

2. Seilführungselement nach Anspruch 1,
dadurch gekennzeichnet, daß die Längsachse des Hohlraums (110) parallel zu dem Seildurchgangsloch (5) angeordnet ist.

3. Seilführungselement nach einem der vorstehenden Ansprüche,
dadurch gekennzeichnet, daß die Zündvorrichtung (15) eine Zündladung in einer Zündkammer (20), ein die Zündladung von der Treibladung trennendes fragiles Trennelement (25) und eine in der Zündladung liegende Zündstrecke enthält, deren Zündkontakte (30) mittels Anschlußorganen (35) aus dem Seilführungselement herausgeführt sind.

4. Seilführungselement nach Anspruch 3,
gekennzeichnet durch einen elektrischen Schaltkreis, der an die Anschlußorgane (35) angeschlossen ist.

5. Seilführungselement nach einem der vorstehenden Ansprüche,
dadurch gekennzeichnet, daß die Zündvorrichtung (15) an einer ersten Stirnseite (40) in den Hohlraum hineinragt und daß der Hohlraum (110) an einer zweiten, gegenüberliegenden Stirnseite (45) mit einem fragilen Verschlußelement verschlossen ist.

6. Seilführungselement nach einem der vorstehenden Ansprüche,
gekennzeichnet durch eine zylinderförmige Außenkontur, deren Außendurchmesser etwa dem Innendurchmesser des Rohrzylinders entspricht.

7. Seilführungselement nach Anspruch 6,
dadurch gekennzeichnet, daß das Seildurchgangsloch (5) und/oder die Längsachse des Hohlraums (110) im wesentlichen parallel zur Achse des zylinderförmigen Seilführungselements verlaufen.

8. Seilführungselement nach einem der vorstehenden Ansprüche,
dadurch gekennzeichnet, daß das zylinderförmige Seilführungselement aus mehreren separaten Elementabschnitten zusammengesetzt ist.

9. Seilführungselement nach einem der vorstehenden Ansprüche,
dadurch gekennzeichnet, daß das Seilführungselement oder die Elementabschnitte aus Kunststoffmaterial hergestellt sind.

10. Pyrotechnischer Gurtstraffer mit einem Kolben (1), der mittels einer Treibladung im Falle eines Unfalles in einem Rohrzylinder (10) linear verschiebbar ist und der mit mindestens einem Zugseil (150) verbunden ist, das durch Verschiebung des Kolbens (1) zurückziehbar ist und das an einem Gurtanlenkglied (2) befestigt ist, und mit einem Seilführungselement (140) in dem Rohrzylinder (10),
dadurch gekennzeichnet, daß das Seilführungselement (140) nach einem der vorstehenden Ansprüche ausgebildet ist.
